Europäisches Patentamt

European Patent Office

Office européen des brevets

(11) Publication number: **0 219 480 B1**

# EUROPEAN PATENT SPECIFICATION

(45) Date of publication of patent specification: **01.06.94**   (51) Int. Cl.5: **G02F  1/137**, G02F 1/133

(21) Application number: **86850352.5**

(22) Date of filing: **14.10.86**

(54) **Ferroelectric liquid crystal devices.**

(30) Priority: **14.10.85 SE 8504762**

(43) Date of publication of application:
**22.04.87 Bulletin  87/17**

(45) Publication of the grant of the patent:
**01.06.94 Bulletin  94/22**

(84) Designated Contracting States:
**CH DE FR GB LI NL SE**

(56) References cited:
**EP-A- 0 091 637**
**EP-A- 0 092 181**
**DE-A- 3 242 847**
**FR-A- 2 199 425**

**FERROELECTRICS, vol. 59, 1984, pages 25-67,
Gordon and Breach, Science Publishers Inc.,
US; N.A. CLARK et al.: "Surface-stabilized
ferroelectric liquid crystal electro-optics:
new multistate structures and devices"**

**PATENT ABSTRACTS OF JAPAN, vol. 5, no.
84 (P-64)[756], 2nd June 1981; & JP-A-56 32
101**

(73) Proprietor: **S.A.R.L. S.T. Lagerwall
8, corniche Bonaparte
F-83150 Bandol(FR)**

(72) Inventor: **Lagerwall, Sven T.
Snäckvägen 30 B
S-41475 Göteborg(SE)**
Inventor: **Stebler, Gengt
Carlbergsgatan 19
S-41251 Göteborg(SE)**
Inventor: **Wahl, Jürgen
Kronthaler Strasse 36
D-6232 Bad Soden 2(DE)**

(74) Representative: **Grennberg, Erik Bertil et al
H. ALBIHNS PATENTBYRA AB
P.O. Box 3137
S-103 62 Stockholm (SE)**

JAPANESE JOURNAL OF APPLIED PHYSICS, vol. 23, no. 6, part 2, June 1984, pages L385-L387, Tokyo, JP; K. YOSHINO et al.: "New electro-optic effect of microsecond response utilizing transient light scattering in ferroelectric liquid crystal"

CONFERENCE RECORD OF THE 1985 INTERNATIONAL DISPLAY RESEARCH CONFERENCE, Hyatt Islandia San Diego, California, 15th-17th October 1985, pages 213-221, IEEE, New York, US; S.T. LAGERWALL et al.: "Ferroelectric liquid crystals for displays"

INTERNATIONAL HANDBOOK OF LIOUID CRYSTAL DISPLAYS, 1975-76, p. 66.

## Description

The present invention regards a liquid crystal device of the type recited in the preamble of the appended claim.

A liquid crystal device of this type is known from the document FERROELECTRICS, vol. 59, 1984, pages 25-67, by Clark et al. (in particular Chapter VIII, section 2. Non-emissive Screens). There is disclosed a combination with a liquid crystal having the so-called SSFLC structure, doped with a dichroic guest host dye and having a 45 degree tilt, in combination with one polarizer. The SSFLC structure is known from US-A-4 367 924.

An object of the present invention is to avoid the use of polarizers, which are expensive, particularly those having a large surface.

This object and other objects and advantages are obtained, according to the present invention, by a liquid crystal device of the type mentioned, which has the properties recited in the characterizing clause of the claim.

Instead of using, as in the said prior art, a liquid crystal having a tilt of 45 degrees, the invention proposes using a tilt of about 22,5 degrees, giving an switching angle between the two states amounting to 45 degrees. As that angle is sometimes not obtained exactly, contrast may be maximized by rotating the liquid crystal relative to the other optically active layer according to the invention, which is a lambda quarter plate.

By means of the invention, it is possible to obtain liquid crystal display panels of considerable size at comparatively moderate cost.

A lambda quarter plate may be something as simple as a film of stretched cellophane, which by stretching has obtained the necessary optical activity.

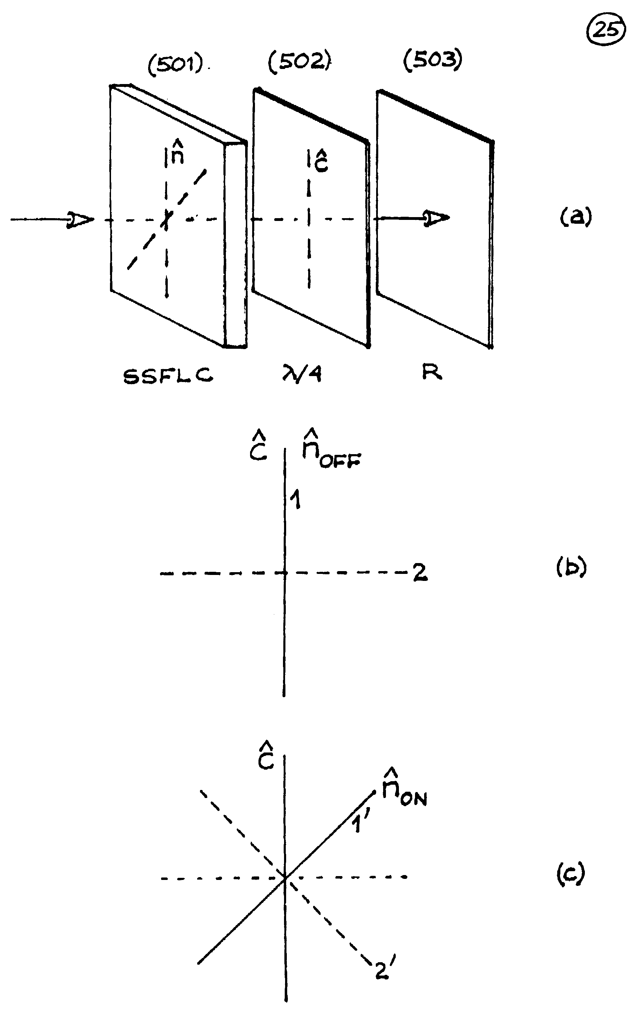

The invention will now be further described with reference to the Figure, where (a) shows an exploded view of a display device having no polarizing filter, (b) and (c) explaining the function of the invention by diagrams of polarization vectors.

This device is designed according to Figure (a) as an SSFLC cell (501) in direct combination with a lambda quarter plate (502) and a back reflector R (503). The FLC used should have a tilt angle of $\theta$ = 22.5 degrees, or close to this value, allowing the optic axis to be switched by $2\theta$ = 45 degrees, It should further have a high concentration of a dichroic dye, absorbing selectively that part of the incoming light that has its plane of polarization parallel to the optic axis. The dye action in a liquid crystal host material has been described in many contexts, for instance in White et al, J.Appl.Phys. 1974, Volume 45, page 4718, and convenient dyes are available commercially, e.g. from Merck or Chisso. The quarter wave plate could be of low-cost type like cellophane or other similar birefringent plastic film and should have its optic axle $\hat{c}$ oriented, parallel or perpendicular to the FLC director $\hat{n}$. In this state, which we call the OFF state, light vibrating in direction 1 (cf Figure (b)) is absorbed, whereas components along the 2 direction go unaffected through, and back after being reflected by R. In the ON state the FLC director n is switched by an appropriate electric pulse to the direction 1' (cf Figure (c)) and the optic axis of the dichroic molecules follows this direction. 1' is now the absorption direction and after traversing the FLC the light will mainly vibrate in the 2' direction. Therefore it will be split up by the quarter wave plate into two components which are traversing it twice due to the reflection and thus suffering a relative phase retardation of 180 degrees. Coming back into the FLC it therefore vibrates along the 1' direction and is consequently absorbed. With an ideal dichroic dye and ideal quarter wave plate the device reflects 50 percent of the incoming light back in the OFF state and none in the ON state, which is the same as an ideal twisted nematic cell. In reality, light will not be perfectly absorbed in the selective direction and the achieved contrast will depend on the dichroic absorption ratio. The quarter wave plate film will also work perfectly only around a certain wave-length which is given by its thickness. This can then be adjusted to correspond to a wave-length of 555 nm or adjusted to the absorption spectrum of the dichroic dye. In any case the activated ON elements of a display using this principle appear as black or dark characters against a background which is greyish or having a hue given by the dye.

Now it is very common that $\theta$ is near the ideal value of 22.5 degrees, although in practice it will deviate from this value. The phase lag between the ordinary and the extraordinary ray is then still 180 degrees after the double pass but the vibrations differ in amplitude, hence the outgoing vibration is no longer orthogonal to the polarizer. Thus the optimum condition for extinction is no longer met. An improvement can be achieved in this case (if the highest extinction is desirable) by a simple offset of the polarizer direction. If the tilt deviation from 22.5 degrees is $\delta$, then P has to be turned by $2\delta$ in the direction opposite to the one in which the director switches to the ON state. The extinction is then complete for the wavelength chosen, to the modest prize of a slight lowering of the brightness (to $\cos^2 4\delta$) of the OFF state. For very small $\delta$-values, an adjustment with a slight dichroic dye concentration may also be helpful.

## Claims

**1.** A liquid crystal device comprising:

a layer of surface-stabilized ferroelectric liquid crystal (501) electrically switchable for enabling two different states, in one of which states, the optical axis of the liquid crystal molecules aligns in a first direction ($n_{off}$), whilst, in the other one, the optical axis of the molecules aligns in a second direction ($n_{on}$), the first and second directions being substantially parallel to the liquid crystal layer and forming a mutual angle equal to twice the smectic tilt angle $\theta$;

a dichroic guest dye dissolved in the ferroelectric liquid crystal; and

a light reflecting layer (503);

characterised in that the smectic tilt angle $\theta$ is about 22.5°, and in that a lambda quarter plate (502) is disposed between said liquid crystal layer (501) and said reflecting layer (503), said plate (502) having its optical axis (C) substantially parallel or perpendicular to one of said directions ($n_{off}$, $n_{on}$).

## Patentansprüche

**1.** Flüssigkeitskristallvorrichtung mit:

einer Schicht aus oberflächenstablisiertem ferroelektrischem Flüssigkristall (501), die elektrisch umschaltbar ist, um zwei verschiedene Zustände zu ermöglichen, wobei die optische Achse der Flüssigkristallmoleküle in dem einen Zustand eine erste Richtung ($n_{off}$) und in dem anderen eine zweite Richtung ($n_{on}$) einnimmt und beide Richtungen weitgehend parallel zur Flüssigkeitskristallschicht sind und einen Winkel einschließen, der gleich dem zweifachen smektischen Neigungswinkel $\Theta$ ist;

einem zweifarbigen Gastfarbstoff, der in dem ferroelektrischen Flüssigkristall gelöst ist; und

einer lichtreflektierenden Schicht (503);

dadurch gekennzeichnet, daß der smektische Neigungswinkel $\Theta$ etwa 22,5° beträgt und daß eine Lambdaviertel-Platte (502) zwischen der Flüssigkristallschicht (501) und der reflektierenden Schicht (503) angeordnet ist, wobei die optische Achse (C) dieser Platte (502) weitgehend parallel oder senkrecht zu einer der erwähnten Richtungen ($n_{off}$, $n_{on}$) verläuft.

## Revendications

**1.** Dispositif à cristal liquide comprenant :

une couche (501) de cristal liquide ferroélectrique stabilisé en surface (SSFLC) pouvant être électriquement commutée pour permettre deux états différents, dans l'un desquels l'axe optique des molécules de cristal liquide s'aligne dans une première direction ($n_{off}$), tandis que dans l'autre de ces états, l'axe optique des molécules s'aligne dans une seconde direction ($n_{on}$), les première et seconde directions étant pratiquement parallèles à la couche de cristal liquide et formant un angle l'une par rapport à l'autre égal au double de l'angle $\theta$ d'inclinaison smectique ;

un pigment hôte dichroïque dissous dans le cristal liquide ferroélectrique ; et

une couche (503) réfléchissant la lumière ; caractérisé en ce que l'angle $\theta$ d'inclinaison smectique est environ 22,5°, et en ce qu'une plaque quart d'onde (502) est disposée entre ladite couche de cristal liquide (501) et ladite couche réfléchissante (503), l'axe optique (C) de ladite plaque (502) étant pratiquement parallèle ou perpendiculaire à l'une desdites directions ($n_{off}$, $n_{on}$).

㉕

(501).   (502)   (503)

$\hat{n}$   $\hat{c}$

(a)

SSFLC   $\lambda/4$   R

$\hat{c}$  $\hat{n}_{OFF}$

1

2

(b)

$\hat{c}$

$\hat{n}_{ON}$

1'

2'

(c)